(19) **Europäisches Patentamt European Patent Office Office européen des brevets**

(11) **EP 4 600 842 A1**

(12) **EUROPEAN PATENT APPLICATION**

(43) Date of publication:
**13.08.2025 Bulletin 2025/33**

(21) Application number: **25154431.8**

(22) Date of filing: **28.01.2025**

(51) International Patent Classification (IPC):
**G06F 16/532** (2019.01)     **G06F 16/583** (2019.01)

(52) Cooperative Patent Classification (CPC):
**G06F 16/532; G06F 16/583**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2024 CN 202410179054**

(71) Applicant: **BEIJING YOUZHUJU NETWORK TECHNOLOGY CO. LTD.**
**Beijing 101299 (CN)**

(72) Inventors:
• **XU, Jie**
  **Beijing, 100028 (CN)**
• **ZHANG, Hanbo**
  **Beijing, 100028 (CN)**
• **LI, Xinghang**
  **Beijing, 100028 (CN)**
• **KONG, Tao**
  **Beijing, 100028 (CN)**

(74) Representative: **Grünecker Patent- und Rechtsanwälte**
**PartG mbB**
**Leopoldstraße 4**
**80802 München (DE)**

(54) **METHOD, APPARATUS, DEVICE AND MEDIUM FOR OBJECT RECOGNITION FROM IMAGE**

(57)     Methods, apparatuses, devices and media for object recognition from an image are provided. In a method, a query expressed in a natural language is received, the query specifying an attribute of an object to be recognized from the image. At least one instance of the object is recognized from the image based on the query using a machine learning model. The at least one instance is provided in response to determining that a number of the at least one instance satisfies a predetermined condition. By the example implementations of the subject matter described herein, rounds of conversation between the machine learning model and a user may be significantly reduced, thereby the object is recognized from the image in a simpler and more efficient way.

EP 4 600 842 A1

## Description

### FIELD

Example implementations of the present disclosure generally relate to image processing, and in particular, to a method, an apparatus, a device and a computer-readable storage medium for object recognition from an image.

### BACKGROUND

Machine learning techniques have been widely used to handle instance-aware related image processing tasks. A user may provide an image to be recognized and may use a natural language to describe an object recognition task that is expected to be performed. The task described in the natural language may be ambiguous or cannot clearly describe the task, which leads to a need for a machine learning model to repeatedly confirm a recognition target with the user. In this case, it is expected to improve understanding ability of the machine learning model, so as to process the image in a more accurate way.

### SUMMARY

In a first aspect of the present disclosure, there is provided a method for object recognition from an image. In the method, a query expressed in a natural language is received, the query specifying an attribute of an object to be recognized from the image. At least one instance of the object is recognized from the image based on the query using a machine learning model. The at least one instance is provided in response to determining that a number of the at least one instance satisfies a predetermined condition.

In a second aspect of the present disclosure, there is provided an apparatus for object recognition from an image. The apparatus includes: a receiving module configured to receive a query expressed in a natural language, the query specifying an attribute of an object to be recognized from the image; a recognizing module configured to recognize at least one instance of the object from the image based on the query using a machine learning model; and a providing module configured to provide the at least one instance in response to determining that a number of the at least one instance satisfies a predetermined condition.

In a third aspect of the present disclosure, there is provided an electronic device. The electronic device includes: at least one processing unit; and at least one memory coupled to the at least one processing unit and storing instructions executable by the at least one processing unit, the instructions, when executed by the at least one processing unit, causing the electronic device to perform the method according to the first aspect of the present disclosure.

In a fourth aspect of the present disclosure, there is provided a computer-readable storage medium having stored thereon a computer program that, when executed by a processor, causes the processor to implement the method according to the first aspect of the present disclosure.

It should be appreciated that the content described in this section is neither intended to identify key or essential features of the implementations of the present disclosure, nor to be used to limit the scope of the present disclosure. Other features of the present disclosure will become readily comprehensible through the following description.

### BRIEF DESCRIPTION OF THE DRAWINGS

Hereinafter, the above and other features, advantages and aspects of various implementations of the present disclosure will become more apparent with reference to the drawings and the following detailed description. Throughout the drawings, the same or similar reference signs refer to the same or similar elements, where:

Fig. 1 illustrates a block diagram of an application environment in accordance with an example implementation of the present disclosure;

Fig. 2 illustrates a block diagram of object recognition from an image in accordance with some implementations of the present disclosure;

Fig. 3 illustrates a block diagram of object recognition from an image in accordance with some implementations of the present disclosure;

Fig. 4 illustrates a block diagram of machine learning model training in accordance with some implementations of the present disclosure;

Fig. 5 illustrates a block diagram of an initial sample in accordance with some implementations of the present disclosure;

Fig. 6 illustrates a block diagram of reference sample generation in accordance with some implementations of the present disclosure;

Fig. 7 illustrates a block diagram of recognized position verification in accordance with some implementations of the present disclosure;

Fig. 8 illustrates a block diagram of expanded reference sample generation in accordance with some implementations of the present disclosure;

Fig. 9 illustrates a block diagram of object recognition from an image in accordance with some implementations of the present disclosure;

Fig. 10 illustrates a block diagram of object recognition from an image using machine learning models with different numbers of iterations in accordance with some implementations of the present disclosure;

Fig. 11 illustrates a block diagram of manipulating a recognized object using a robotic device in accordance with some implementations of the present disclosure;

Fig. 12 illustrates a block diagram of manipulating a recognized object using a robotic device in accordance with some implementations of the present disclosure;

Fig. 13 illustrates a flowchart of a method for object recognition from an image in accordance with some implementations of the present disclosure;

Fig. 14 illustrates a block diagram of an apparatus for object recognition from an image in accordance with some implementations of the present disclosure; and

Fig. 15 illustrates a block diagram of a device capable of implementing multiple implementations of the present disclosure.

## DETAILED DESCRIPTION

Implementations of the present disclosure will be described in more detail below with reference to the drawings. Although some implementations of the present disclosure are illustrated in the drawings, it should be appreciated that the present disclosure may be implemented in various forms and should not be construed as limited to the implementations set forth herein. Rather, these implementations are provided for a thorough and complete understanding of the present disclosure. It should be appreciated that the drawings and implementations of the present disclosure are only for illustrative purposes, and are not intended to limit the scope of protection of the present disclosure.

In the description of the implementations of the present disclosure, the terms "include/include" and their similar terms should be understood as open-ended inclusions, that is, "include/include but not limited to". The term "based on" should be understood as "at least partially based on". The term "one implementation" or "the implementation" should be understood as "at least one implementation". The term "some implementations" should be understood as "at least some implementations". Other explicit and implicit definitions may also be included below. As used herein, the term "model" may represent an association relationship between various data. For example, the association relationship may be acquired based on various technical solutions currently known and/or to be developed in the future.

It may be appreciated that data involved in the technical solution (including but not limited to the data itself, acquisition or use of the data) should comply with requirements of corresponding laws, regulations and related provisions.

It may be appreciated that before using the technical solutions disclosed in the embodiments of the present disclosure, the user should be informed of the type, scope of use, use scenarios, etc. of the personal information involved in the present disclosure in an appropriate manner in accordance with relevant laws and regulations, and the user's authorization should be obtained.

For example, in response to receiving an active request from a user, prompt information is sent to the user to explicitly inform the user that the operation requested to be performed will require the acquisition and use of the user's personal information. In this way, the user may independently choose, based on the prompt information, whether to provide the personal information to software or hardware such as an electronic device, an application, a server, or a storage medium that performs the operations of the technical solutions of the present disclosure.

As an optional but non-limiting implementation, the manner of sending the prompt information to the user in response to receiving an active request from the user may be, for example, in the form of a pop-up window, and the prompt information may be presented in text in the pop-up window. In addition, the pop-up window may also include a selection control for the user to select "agree" or "disagree" to provide the personal information to the electronic device.

It may be appreciated that the above process of notifying and acquiring the user's authorization is only illustrative and is not intended to limit the implementations of the present disclosure, and other manners that satisfy relevant laws and regulations may also be applied to the implementations of the present disclosure.

The term "in response to" used herein represents a state where a corresponding event occurs or a condition is satisfied. It would be appreciated that an execution timing of a subsequent action performed in response to the event or the condition is not necessarily strongly associated with a time when the event occurs or the condition is satisfied. For example, in some cases, the subsequent action may be performed immediately when the event occurs or the condition is satisfied; while in some other cases, the subsequent action may be performed after a period of time since the event occurs or the condition is satisfied.

Example Environment

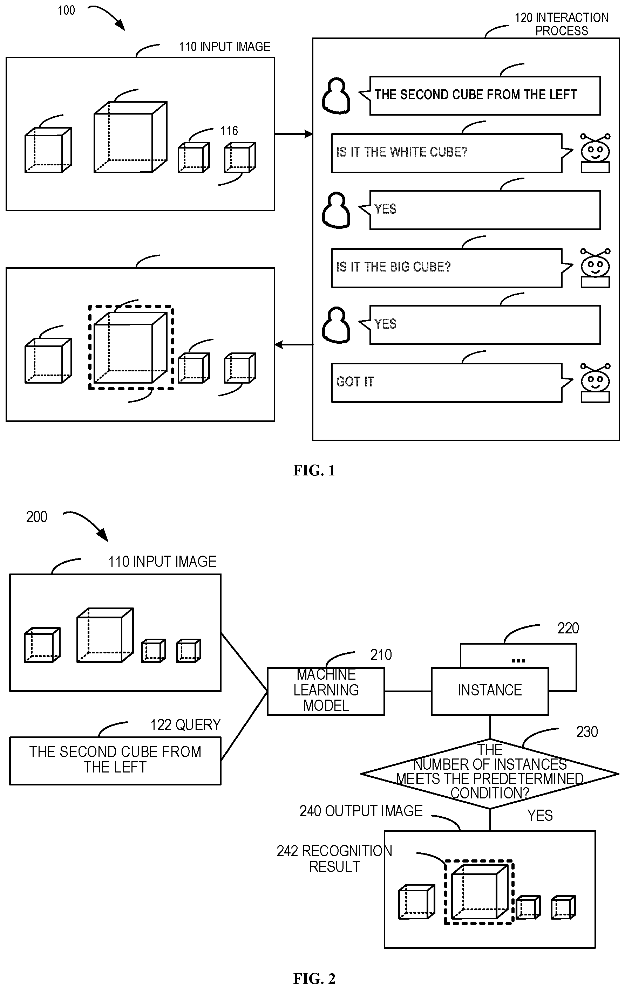

Machine learning techniques have been widely used to handle instance-aware related image processing tasks. Various machine learning models have been developed. Reference is made to Fig. 1 for describing an application environment according to an example implementation of the present disclosure, which illustrates a block diagram 100 of an application environment in accordance with an example implementation of the present disclosure. As shown in Fig. 1, a user may specify an input image 110, which may include instances of one or more objects, for example, multiple instances 112, 114, 116, and 118 of a cube. The user may interact with a machine learning model to specify a target that is expected to be recognized.

In an interaction process 120, the user may send a query 122 and inform the machine learning model that "the second cube from the left" is expected to be recognized from the input image 110. However, in order to determine the recognition target, the machine learning model needs to repeatedly confirm various features of the object expected to be recognized with the user. For example, the machine learning model may send a question 124 and ask the user whether a white cube is expected to be recognized, and the user may provide an answer 126 "Yes". The machine learning model may further send a question 128 and ask whether a large cube is expected to be recognized, and the user may provide an answer 126 "Yes". At this time, the machine learning model considers that the object expected to be recognized can be accurately determined, and provides a response 132 to inform the user that the content of the task is clearly known.

Further, the machine learning model may recognize the object based on the attributes of the object acquired from the query 122 and the respective answers. The machine learning model may provide an output image 140, and a recognition result 142 is represented using dotted boxes. At this time, the recognized cube is the second cube from the left of the input image 110, and the cube is a large white cube.

Although it is clearly specified in the initial query 122 that "the second cube from the left" is expected to be recognized, and it can be uniquely determined based on the query 122 that the instance 114 in the input image matches the query 122. In the example of Fig. 1, the user still has to repeatedly answer the questions of the machine learning model in order to describe the multi-faceted attributes of the object expected to be recognized from different aspects. At this time, it is expected that a more confident and accurate machine learning model can be provided, and it is expected that the machine learning model can reduce the complexity of the question answering process, thereby recognizing the object in a simpler and more efficient way.

Overview of Object Recognition

In order to at least partially solve the deficiencies in the prior art, according to an example implementation of the present disclosure, a method for object recognition from an image is proposed. Referring to Fig. 2 for describing an overview according to an example implementation of the present disclosure, which illustrates a block diagram 200 of object recognition from an image in accordance with some implementations of the present disclosure. A query 122 expressed in a natural language may be received, the query 122 specifying an attribute of an object to be recognized from the image (i.e., the input image 110). Further, the machine learning model 210 may recognize at least one instance 220 of the object from the image based on the query 122. As shown in block 230, it may be determined whether a number of the at least one instance satisfies a predetermined condition (e.g., equal to 1, or other values). If the number satisfies the predetermined condition, the machine learning model 210 may provide an output image 240 to indicate a recognition result 242 (e.g., represented by four vertex coordinates of a bounding box).

It should be appreciated that the predetermined condition here may be specified by the user. Alternatively and/or additionally, the predetermined condition may be a default condition set by the machine learning model. Further, although the query 122 is expressed in English above, alternatively and/or additionally, the query may be expressed in any other language such as Chinese, Japanese, French, etc.

As shown in Fig. 2, "the second cube from the left" may be uniquely determined based on the query 122. In other words, only a unique instance of the cube can be recognized from the input image 110, so the recognition result 242 may be provided without performing an additional question answering operation. By the example implementations of the present disclosure, the complexity of the conversation between the machine learning model and the user may be significantly reduced (e.g., there is no further question answering process), thereby recognizing the object in the image in a simpler and more efficient way.

Detailed Process of Object Recognition

An overview according to an example implementation of the present disclosure has been described, and more details of the object recognition from the image will be provided below. According to an example implementation of the present disclosure, in a case where it is determined that the number of the at least one instance does not satisfy the predetermined condition, a first question for acquiring an attribute of the object may be provided. In other words, if the machine learning model considers that the query from the user is ambiguous or not clear enough, more information about the attributes of the object may be acquired based on an additional question answering process. Then, a first group of instances of the object is recognized from the image using the machine learning model based on the query and a first answer to the first question, where a first number of the first group of instances is no greater than the number of the at least one instance.

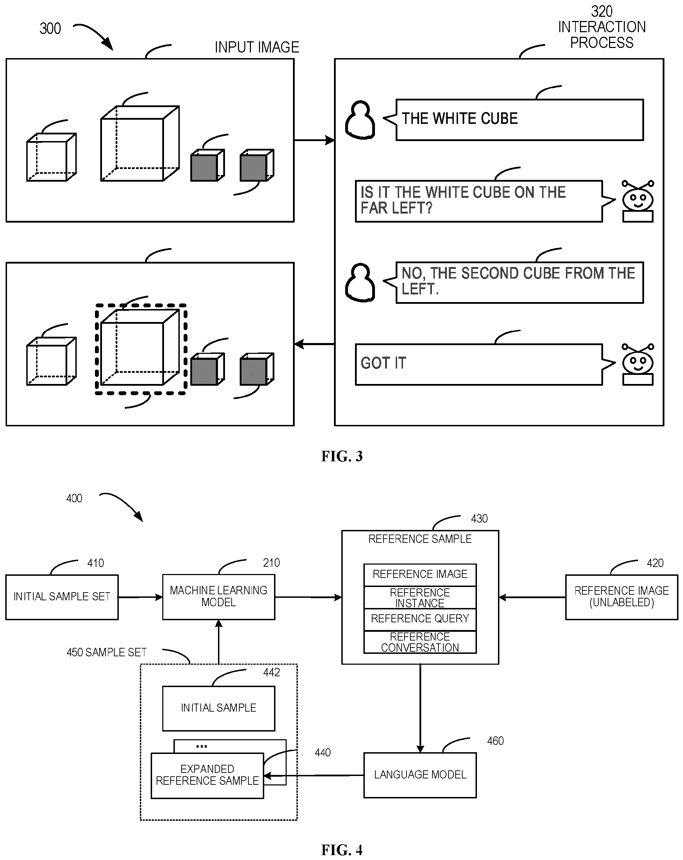

Reference is made to Fig. 3 for describing more details of object recognition, which illustrates a block diagram 300 of object recognition from an image in accordance with some implementations of the present disclosure. As shown in Fig. 3, an input image 310 may be provided to the machine learning model, and the input image 310 may include multiple instances 312, 314, 316, and 318 of a cube. The instances 312 and 314 are related to white cubes, and the instances 316 and 318 are related to gray cubes.

The user may provide a query 322 and express a desire to recognize a white cube. However, since the input image 310 includes multiple instances 312 and 314 of white cubes, the number of instances at this time is 2 which does not satisfy the predetermined condition (the number of instances is 1). In the case where "the white cube" cannot clearly specify the recognition target, the machine learning model may ask the user questions to acquire information about other attributes. According to an example implementation of the present disclosure, the attribute of the object may include a plurality of aspects, such as a name, a position, a color, a size, a material, a description, etc. of the object.

For example, the machine learning model may send a question 324 to ask the user whether the white cube on the far left is expected to be recognized. The user may provide an answer 326 and express a desire to recognize "the second white cube from the left". At this time, the machine learning model may provide a response 328 and provide an output image 330 to indicate a recognition result 332. In this example, an additional question answering process is only provided to acquire more information about the attributes of the object when the object that satisfies the needs of the user cannot be uniquely determined. In this way, the complexity of the interaction process may be reduced, and the object may be recognized in a more accurate way.

According to an example implementation of the present disclosure, if the information acquired in a question answering process of one round is still insufficient to determine the recognition target, the machine learning model may ask more questions. Specifically, in a case where it is determined that the first number does not satisfy the predetermined condition, a second question for acquiring an attribute of the object may be provided. For example, the machine learning model may ask for more information about other aspects of the object such as a position, a size, a material, etc. of the object. Further, a second group of instances of the object may be recognized from the image using the machine learning model based on the query, the first answer, and a second answer to the second question, where a second number of the second group of instances is no greater than the first number.

By the example implementations of the present disclosure, more information about the recognition target may be acquired through more question answering rounds until the number of the recognized instances of the object satisfies the predetermined condition. For example, the recognition result that matches the expectation of the user may be uniquely determined, thereby improving the accuracy of object recognition.

According to an example implementation of the present disclosure, the machine learning model may be trained in various manners, so as to improve the accuracy of the machine learning model. In the case where the accuracy is improved, the machine learning model may better understand the query from the user, thereby further reducing the number of question answering rounds, thereby improving the recognition efficiency.

According to an example implementation of the present disclosure, the machine learning model may be obtained in a self-evolving manner. Specifically, a reference sample for training the machine learning model may be generated using the machine learning model based on a reference image, the reference image including a reference instance of a reference object. A group of expanded reference samples for training the machine learning model is generated using a language model based on the reference sample. The machine learning model is trained using the group of expanded reference samples.

By the example implementations of the present disclosure, the machine learning model at an initial stage may be a machine learning model obtained by using a limited number of labeled samples and a pre-training process. Then, more reference samples may be generated based on the processing capability of the machine learning model itself. Further, the language model may be used to process a text part expressed in the natural language in the reference sample, thereby providing richer training data, thereby improving the accuracy of the machine learning model.

Reference is made to Fig. 4 for describing an overview of the training process, which illustrates a block diagram 400 of machine learning model training in accordance with some implementations of the present disclosure. As shown in Fig. 4, a pre-training process may be performed using an initial sample set 410 to acquire the machine learning model 210. Here, the initial sample set 410 may include a limited number of initial samples (labeled samples), and the initial samples may include, for example, an image to be processed, a query, an instance of an object in the image, and a conversation for acquiring more details of the object (for example, including a question answering process of one or more rounds).

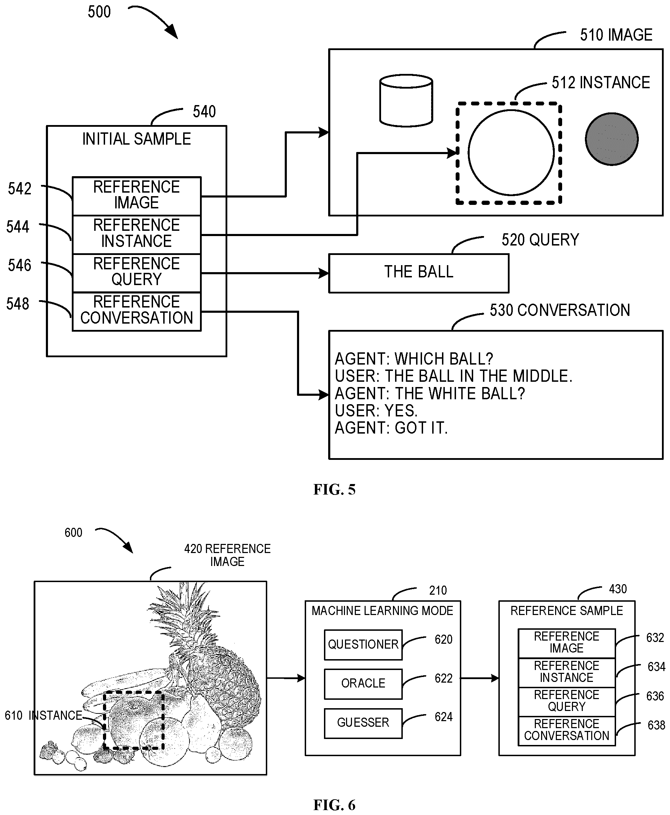

Reference is made to Fig. 5 for describing more details of the initial sample, which illustrates a block diagram 500 of an initial sample in accordance with some implementations of the present disclosure. As shown in Fig. 5, the initial sample 540 is a labeled sample, and may include a reference image 542, a reference instance 544, a reference query 546, and a reference conversation 548. The reference image 542 may point to an image 510 including instances of a cylinder, a white sphere, and a gray sphere, for example. Assuming that the user provides a query 520 and expresses a desire to recognize the sphere, a conversation 530 may be provided at this time to ask for more information about the recognition target.

In the conversation 530, "agent" may represent the machine learning model, and "user" may represent the human user. After a plurality of questions and answers, it may be determined that the user expects to query "a white sphere at the middle position of the image". At this time, the reference image 542 may correspond to the image 510, the reference instance 544 may correspond to the instance 512, the reference query 546 may correspond to the query 520, and the reference conversation 548 may correspond to the conversation 530. Each initial sample may have a similar structure, and the initial sample may be acquired from a training sample set with labels, and a pre-training process is performed for the machine learning model 210. It should be appreciated that the accuracy of the machine learning model 210 after pre-training is not satisfactory, and the accuracy needs to be improved through a subsequent self-evolving process.

Returning to Fig. 4, more reference samples 430 may be generated using the machine learning model 210 and an unlabeled reference image 420. Here, the reference image 420 may come from various image data sets currently known and/or to be developed in the future, and the reference image 420 may only include an image, at this time a bounding box of an instance of an object in the image may be recognized based on an object recognition process. Alternatively and/or additionally, the reference image 420 may include an image and an instance of an object in the image (for example, represented by a bounding box).

Reference is made to Fig. 6 for describing more details of generating the reference sample, which illustrates a block diagram 600 of reference sample generation in accordance with some implementations of the present disclosure. As shown in Fig. 6, the reference sample 430 has a structure similar to the initial sample 540, and the reference sample 430 may include a reference image 632, a reference instance 634, a reference query 636, and a reference conversation 638. The reference image 420 may be acquired, and the reference image 420 may include a marked or recognized instance 610. Further, the reference image 420 may be processed using the machine learning model 210, thereby generating the reference sample 430.

According to an example implementation of the present disclosure, in the process of generating the reference sample 430, a reference query specifying an attribute of the reference object may be acquired (for example, in the example of Fig. 6, reference query="apple"). A reference conversation may be generated based on the reference query, the reference conversation including at least one question for acquiring a reference attribute of the reference object and an answer to the at least one question. Then, the reference sample may be generated based on the reference image, the reference instance, the reference query, and the reference conversation. Specifically, the reference image 632 may be represented by using the image (i.e., the reference image 420) in the unlabeled data set described above, and the reference instance 634 may be represented by using the bounding box of the instance 610. Further, the reference query 636 may be determined based on the name of the object, and the reference conversation 638 may be generated using the machine learning model 210.

According to an example implementation of the present disclosure, the machine learning model here may have a plurality of roles, and each role may perform a corresponding task. For example, the role of the machine learning model may include at least one of: a questioner, the questioner may ask a question for acquiring a reference attribute of the reference object; an oracle, the oracle may provide an answer to the question, and the question is used to acquire the reference attribute of the reference object; a guesser, the guesser may recognize the reference instance from the reference image; a determiner, the determiner may determine whether the answer is sufficient to determine the reference object; and a describer, the describer generally describes the reference image. The machine learning model may be trained in various manners, thereby enabling the machine learning model to perform the above tasks.

According to an example implementation of the present disclosure, a prompt may be provided to the machine learning model for setting a role of the machine learning model, thereby enabling the machine learning model to perform a corresponding task. By the example implementations of the present disclosure, the machine learning model itself may be used to perform various tasks during training and inference, thereby obtaining a more accurate machine learning model in a self-evolving manner. For example, the role of the machine learning model may be set by using the prompts as shown in Table 1 below.

Table 1 Example of configuring the machine learning model

| Role | Task | Prompt |
|---|---|---|
| Questioner | Question | Be helpful, and ask for clarification if unsure. |
| Guesser | Location | Be helpful, and output bounding box only. |
| Oracle | Answer | Be helpful, and answer questions. |

(continued)

| Role | Task | Prompt |
|---|---|---|
| Describer | Provide the topic information of the image | What do you see? |
| Determiner | Stop | Is it clear? |

According to an example implementation of the present disclosure, the reference conversation is generated in at least one round. In a target round of the at least one round, the reference conversation may be generated based on the following process. The machine learning model may ask a question for acquiring a reference attribute of the reference object. For example, the questioner 620 in the machine learning model may ask questions about various attributes of "the apple": "a red apple?", "a green apple?", "a big apple?", "a small apple?", etc. The machine learning model may provide an answer to the question. For example, the oracle 622 may play a human role and provide an answer: "Yes", "No", etc. Alternatively and/or additionally, the guesser 624 in the machine learning model may recognize the instance of the object from the reference image 420.

Further, the question and the answer may be added to the reference conversation. At this time, the current question answering process ends. By the example implementations of the present disclosure, richer information about the attributes of the object may be gradually acquired in the question answering process of one or more rounds, thereby constructing a training sample with higher precision.

According to an example implementation of the present disclosure, a verification process may be added in each question answering round, that is, verifying whether the instance of the object recognized by the guesser 624 is credible. Specifically, the recognized position (e.g., the bounding box) of the reference instance (i.e., the instance 610) of "the apple" may be determined from the reference image 420 by the guesser 622 in the machine learning model. Further, in response to determining that a difference between the recognized position and a marked position of the reference instance in the reference image is greater than a predetermined threshold, the question and the answer may be discarded.

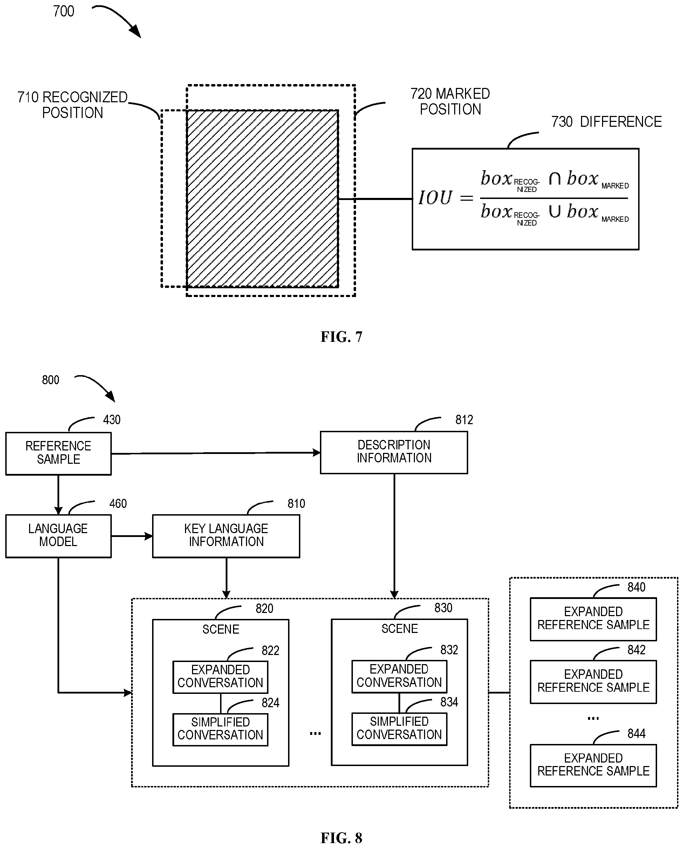

Reference is made to Fig. 7 for describing more details of the verification process, which illustrates a block diagram 700 of recognized position verification in accordance with some implementations of the present disclosure. As shown in Fig. 7, a difference between the bounding box of the recognized position and the bounding box of the marked position may be determined. For example, the difference 730 may be represented by Intersection over Union (IoU). If it is determined that IoU between the two is greater than a predetermined threshold (e.g., 0.5 or other values), the question and the answer in the current round may be discarded. By the example implementations of the present disclosure, a credible question and answer may be determined based on a simple mathematical operation. The reference conversation is constructed using the question and answer that pass the verification, which may improve the accuracy of the reference sample, thereby improving the accuracy of the machine learning model.

According to an example implementation of the present disclosure, the determiner in the machine learning model may be used to determine whether the answer is sufficient to determine the reference object, that is, whether to stop. If it is determined that the answer is insufficient to determine the reference object, a next round after the target round is initiated; otherwise, the process of constructing the reference conversation may be finished. By the example implementations of the present disclosure, the conversation process may be stopped in time in the case where the language description acquired from the user is sufficient to determine the recognition target. In this way, too many question answering rounds may be prevented from occupying too many computing resources in the training process. Further, the risk of generating too many rounds of conversations in the inference process of the machine learning model may be reduced.

According to an example implementation of the present disclosure, in the process of generating a group of expanded reference samples, the language model may extract key language information from the reference conversation. A group of candidate scenes associated with the reference image may be determined based on description information of the reference image and the key language information. For a target candidate scene in the group of candidate scenes, an expanded reference conversation matching the target candidate scene is generated. Then, a target expanded reference sample in the group of expanded reference samples is generated based on the reference image, the reference instance, the reference query, and the expanded reference conversation. By the example implementations of the present disclosure, the powerful processing capability of the language model may be fully utilized to extract training data from the reference sample 430 that is more conducive to improving the training accuracy.

Reference is made to Fig. 8 for describing more details of generating the expanded reference sample, which illustrates a block diagram 800 of expanded reference sample generation in accordance with some implementations of the present disclosure. As shown in Fig. 8, for example, relevant description information 812 (for example, attributes of relevant objects of respective instances included in the reference image) may be extracted from the reference image in the reference sample 430. For example, for the reference image 420 including a large amount of fruits, the description information 812 may include: an apple, a pear, a lemon, a banana, a pineapple, etc. Alternatively and/or additionally, the description information 812 may further include a color of each fruit, etc.

The language model 460 may process the reference sample 430, so as to extract key language information 810 in the conversation process from the reference query and the reference conversation. For example, the key language information 810 may include a quantity, a color, a positional relationship, etc. of respective fruits. Further, the scene involved in the reference sample 430 may be determined using the language model 460. For example, the scene 820 may represent a scene of "fruit market",..., the scene 830 may represent a scene of "painting".

Further, in each scene, the language model 460 may generate the expanded conversation based on the reference conversation in the reference sample 430. At this time, the expanded conversation may include more language content in a corresponding scene, thereby providing richer training data. Specifically, the expanded conversation 822 may be obtained in the scene of "fruit market",..., and the expanded conversation 832 may be obtained in the scene of "painting". By the example implementations of the present disclosure, richer training data may be acquired for different scenes, thereby enabling the trained machine learning model to flexibly process images in different scenes.

According to an example implementation of the present disclosure, the language model 460 may be used to simplify the expanded reference conversation, a number of question answering rounds in the simplified expanded reference conversation being smaller than a number of question answering rounds in the expanded reference conversation. The language model 460 may simplify the expanded conversation 822 and generate the simplified conversation 824 in the scene 820. The language model 460 may simplify the expanded conversation 832 and generate the simplified conversation 834 in the scene 830. Here, the simplified conversation may include fewer question answering rounds and describe richer semantic information in a shorter text. By the example implementations of the present disclosure, the information carrying amount of the conversation may be increased, thereby improving the performance of the machine learning model.

Further, a group of expanded reference samples may be generated using the expanded conversations and simplified conversations in different scenes, for example, expanded reference samples 840, 842,..., and 844. Assuming that there are 3 scenes, and each scene includes an expanded conversation and a simplified conversation respectively, 2*3=6 expanded reference samples may be generated at this time. By the example implementations of the present disclosure, the number of training samples may be greatly increased, and each training sample may include richer information. In this way, the performance of the machine learning model may be improved. For example, the trained machine learning model may process images in different scenes, and may communicate with the user in an appropriate number of question answering rounds based on whether the query can clearly express the recognition target.

According to an example implementation of the present disclosure, in the process of training the machine learning model, a proportional relationship between an initial sample and the group of expanded reference samples may be reduced, where the machine learning model is pre-trained based on the initial sample. Then, the machine learning model is trained using the initial sample and the group of expanded reference samples based on the proportional relationship. In this way, the machine learning model may be trained using the expanded reference samples including richer information.

Specifically, assuming that N labeled initial samples are used for training in the pre-training stage. In the subsequent self-evolving process, M expanded reference samples may be generated, and at this time, the machine learning model may be trained using the initial samples and the expanded reference samples together. For example, N/2 (or other number) initial samples and M expanded reference samples may be used to perform subsequent training, so as to improve the performance of the machine learning model with considering the ground-truth data of the original manual annotation.

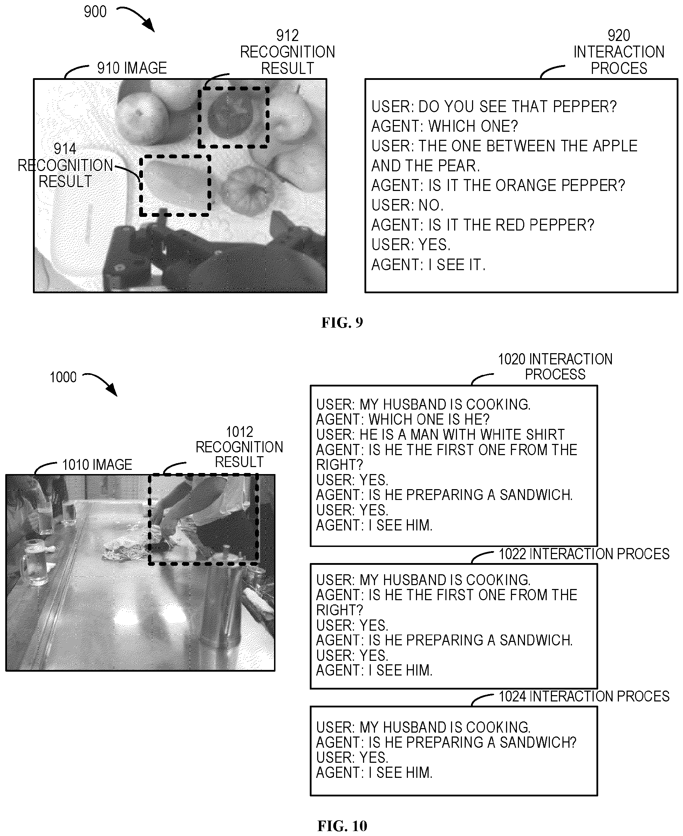

According to an example implementation of the present disclosure, the machine learning model may be trained using the process described above, until the machine learning model reaches an expected convergence condition. Fig. 9 illustrates a block diagram 900 of object recognition from an image in accordance with some implementations of the present disclosure. As shown in Fig. 9, a user may provide an image 910 and interact with the machine learning model. In an interaction process 920, the user may ask the machine learning model "do you see that pepper"? The machine learning model may ask "which one"? The user may answer "the one between the apple and the pear". The machine learning model may ask "is it an orange pepper"? The user may answer "no". The machine learning model may continue to ask "is it a red pepper"? At this time, the user may answer "yes", and the machine learning model may indicate "I see". Then, the machine learning model may recognize the red pepper between the apple and the pear from the image 910 and provide the recognition result 912.

It should be appreciated that since the initial query of the user does not clearly specify which pepper is expected to be recognized, the machine learning model asks several rounds of questions and answers to acquire more information about the recognition target. Assuming that the initial query of the user is "do you see that mango", since the image 910 only includes one mango, the machine learning model may directly recognize the mango at the middle position of the image 910 and provide the recognition result 914.

According to an example implementation of the present disclosure, multiple rounds of training process may be performed for the machine learning model, so as to obtain a machine learning model with better performance. For example, three rounds of training may be performed for the machine learning model, and machine learning models of version 1, version 2, and version 3 are obtained respectively. Reference is made to Fig. 10 for describing processing results of the machine learning models of respective versions. Fig. 10 illustrates a block diagram 1000 of object recognition from an image using machine learning models with different numbers of iterations in accordance with some implementations of the present disclosure.

As shown in Fig. 10, an image 1010 may be provided, and all the three versions of the machine learning models may provide a correct recognition result 1012. However, the complexity of interaction processes of the three versions of the machine learning models is different. For example, an interaction process 1020 illustrates an interaction process between the user and the machine learning model of version 1. After a query, the interaction process 1022 includes a question answering process of three rounds. An interaction process 1024 illustrates an interaction process between the user and the machine learning model of version 2. After a query, the interaction process 1024 includes a question answering process of two rounds. An interaction process 1026 illustrates an interaction process between the user and the machine learning model of version 3. After a query, the interaction process 1026 includes a question answering process of one round. It can be seen that increasing the number of rounds of the training process may improve the performance of the machine learning model, thereby reducing the complexity of the process of acquiring the target to be recognized.

According to an example implementation of the present disclosure, the technical solution described above may be further used to control an operation of a robotic device. Specifically, a physical position of a physical object corresponding to the object in a physical space may be determined based on a position of the at least one instance in the image. Then, the physical object at the physical position may be manipulated using a robotic device in the physical space. By the example implementations of the present disclosure, the user may control the operation process of the robotic device more accurately in the natural language, thereby achieving a desired target.

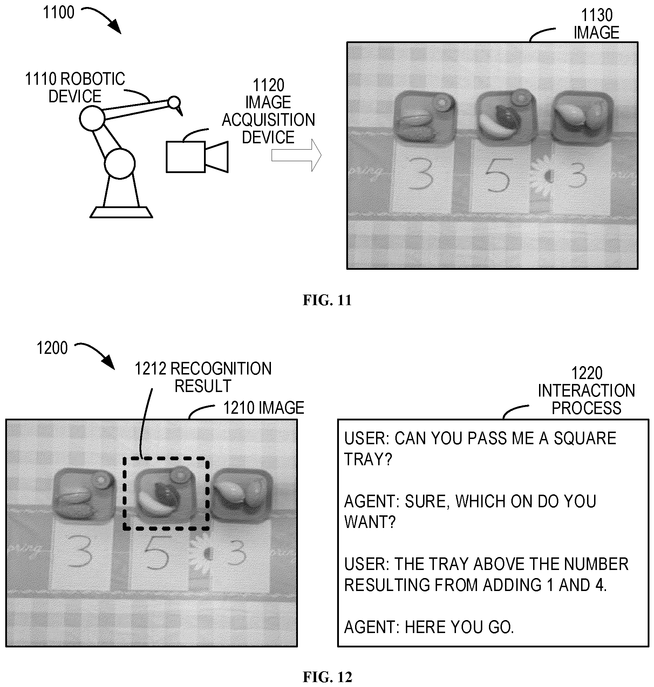

More details are described with reference to Fig. 11 and Fig. 12, which illustrate a block diagram 1100 of manipulating a recognized object using a robotic device in accordance with some implementations of the present disclosure. As shown in Fig. 11, an image acquisition device 1120 may be deployed at a robotic device 1110, and the image acquisition device 1120 may acquire an image 1130 of a physical environment where the robotic device 1110 is located.

Fig. 12 illustrates a block diagram 1200 of manipulating a recognized object using a robotic device in accordance with some implementations of the present disclosure. As shown in Fig. 12, the user may use a natural language to interact with the robotic device. In an interaction process 1220, the user may issue an instruction "Can you pass me the square tray?" The robotic device may answer "Yes, which one do you want?" The user may answer: "The tray above the number represented by the result of 1 plus 4". The robotic device may determine a recognition result 1212 (i.e., 1+4=5, at this time the user expects to obtain the tray above the number "5"), and deliver the tray to the user. It should be appreciated that since the language model is used in the training process to expand the conversation process, the trained machine learning model obtains the inference ability of the language model to some extent. In this way, more complex recognition tasks may be performed.

An overview according to an example implementation of the present disclosure has been described with reference to the drawings, and the process described above will be implemented using a specific architecture of the machine learning model in a robot control environment below. It should be appreciated that existing technical solutions usually adopt a plurality of rounds of interactions between a robot and a human to eliminate ambiguity. However, when the robot is deployed in a complex daily life environment, there exist unpredictable visual inputs, open-ended interactions and diverse user requirements, which bring great challenges to robot control.

Robotic devices are gradually entering daily life as intelligent assistants, and robotic devices that can perform tasks by following natural language instructions have emerged. However, language expressions are ambiguous, which brings great challenges to the control of robotic devices. For example, the working environment of the robotic device is complex and there are unpredictable visual inputs, and at this time, it is necessary to ensure that the robotic device can stably handle diverse user requirements in an open-ended interaction.

Specifically, the visual input may include open vocabulary objects or visual elements, and involve occluded or cluttered backgrounds, which requires the robot to possess an advanced cognitive ability. More importantly, different users may exhibit different preferences for interaction patterns, which requires the support of various working modes in the human-computer communication system. For example, some users may use voice and gesture interaction, and some users can only interact based on gestures, etc. Therefore, the interaction of the robotic device should adapt to diverse user requirements to ensure availability.

In the context of the present disclosure, SInViG (Self-evolving INteractive Visual Grounding) is proposed, which is a self-evolving interactive visual agent for human-computer interaction. The proposed technical solution may continuously and automatically acquire knowledge from unlabeled images and language models without any manual intervention, and execute tasks involving high visual and language complexity. Benefiting from self-evolution, the proposed technical solution is superior to existing interactive visual processing technical solutions. In addition, experiments show that the self-evolving model may continuously obtain various preferences of human users. Further, the proposed model may be deployed at the robotic device and perform interactive tasks. At this time, despite the interference of the complex environment, the robotic device may still follow diverse user instructions and interact with humans in the natural language in a natural way.

According to an example implementation of the present disclosure, SInViG involves two external knowledge sources: 1) a large amount of unlabeled image data for supporting visual robustness training; and 2) a language model for supporting language robustness. The language model may be used to iteratively learn from existing data sets while labeling new data using a continuously optimized model. In addition, the proposed technical solution may ask more diverse, accurate, and informative questions in the face of ambiguity, and gradually eliminate the ambiguity. The model may converge after multiple rounds of iterative learning, and provide more robust human-computer interaction in an open world environment. For experiments on human-computer interaction, SInViG has higher performance in a large number of challenging interactive visual grounding scenarios. For example, the overall success rate of SInViG is 74%, which is 6% higher than the baseline. In addition, human ratings show that the self-evolved SInViG has higher performance compared with the baseline.

According to an example implementation of the present disclosure, a closed-loop and efficient self-evolving system for interactive visual grounding is proposed, and the system is also expected to be transferred to other interactive robot systems. By using such a self-evolving loop, it is highly robust to almost any open world interaction scenarios in terms of vision and language. Further, a massive interactive visual grounding dataset enhanced by the language model may be obtained using SInViG, and the dataset may be used as a basis for a downstream training task, and implement downstream functionality with richer functionality.

In the following, a description of various data involved in the processing process will be provided first. Interactive Visual Grounding (IVG) may locate a vaguely described target object through a plurality of rounds of interactions. Specifically, the input data may include: an image (denoted as $I$) and an initial query (denoted as E). In an interaction of each round t, the robot needs to determine whether to ask a question $q_t$ for eliminating ambiguity, or to give a final decision, i.e., an object $o_t = (x_{min}, y_{min}, x_{max}, y_{max})$. The output represents coordinates of the upper left corner and the lower right corner of the object in the image.

In order to train the machine learning model, each sample $(I, E, \hat{H}, \hat{o})$ includes: an image $I$, an initial query E, historical information $\hat{H} = \{(\hat{q}_i, \hat{a}_i)_0^T\}$ of an ambiguity elimination conversation, and a marked object (i.e., a bounding box of an instance of the object) $\hat{o}_t = (\hat{x}_{min}, \hat{y}_{min}, \hat{x}_{max}, \hat{y}_{max})$, where represents a ground-truth, and $\hat{a}_i$ represents an answer to the question $\hat{q}_i$. In the round t, the dialogue history before $t$ may be connected as context information, so as to determine an output: $\hat{H} = \{\hat{q}_0, \hat{a}_0, \dots, \hat{q}_t, \hat{a}_t\}$.

$\theta$ represents a parameter of the model, and in each round, the machine learning model may directly predict an answer to the question $q_t$ and the most likely target object $o_t$ given the previous conversation and the visual input, at this time $(q_t, o_t) = f_\theta(I_t, \hat{H}_t)$. According to an example implementation of the present disclosure, the predictor of $q_t$ may be called a questioner, and the predictor of $o_t$ may be called a guesser. In addition, in order to facilitate automatic evaluation of an interactive benchmark, an oracle is used to act as a human user: $a_{t+1} = f_\theta(q_{t+1}, I_t, \hat{H}_t, \hat{o})$, where $a_t$ represents a predicted answer of $q_t$. It should be appreciated that the oracle will not be used during human-computer interaction or real robot deployment (i.e., the inference process).

In each round t, in addition to $a_t$ and $q_t$, the model also needs to determine whether the information that has been acquired currently is sufficient to find the target. In order to solve this problem, the determiner may predict whether the conversation should be stopped $s_t \in (Yes, No)$, and use a fixed prompt "Is it clear". According to an example implementation of the present disclosure, for example, the prompts as shown in Table 1 above may be used. In each round, the model will first call the determiner to predict $s_t = f_\theta(I_t, \hat{H}_t)$. If $s_t$ is "Yes", a question is asked and an answer from the user is waited for.

By using a large amount of unlabeled image data, the model may continuously and automatically improve robustness, so as to cope with the complexity of visual observation and open-ended language expressions. The model may start from a data set with manual marks and a supervised model. In each iteration, new marks may be automatically generated according to unlabeled images and the model of the last iteration. Then, the generated marks are processed (for example, polished) using the language model, so as to obtain a wider and richer text distribution, thereby improving the language interaction ability. The processed data may be combined with the previous training data, and used to train the model for the next iteration.

According to an example implementation of the present disclosure, the self-evolving method may be based on following assumptions: (1) an initial interactive model with reasonable performance, in the context of the present disclosure, the initial model may be obtained using supervised learning of a human-labeled data set; (2) an accessible language model; and (3) a large amount of unlabeled images. If the image does not include the bounding box of the object, an object detector may be used to determine the bounding box where the object is located.

According to an example implementation of the present disclosure, for texts and integers (e.g., coordinates of the bounding box), a unified tokenizer, a visual encoder, and a transformer backbone network may be used. Three tasks including the questioner, the guesser, and the oracle are formulated in a unified framework.

Regarding the unified tokenizer, the questioner, the guesser, and the oracle may use a unified network with shared parameters. Different instructions are used to distinguish different roles. The questioner and the oracle involve a text generation task, and the guesser involves predicting a position of an object. In order to unify the feature space, a unified tokenizer may be constructed for the above three tasks. Specifically, for example, the unified tokenizer may be implemented based on various tokenizer technologies currently known and/or to be developed in the future. For example, for the coordinates of the bounding box after normalization, 1000 (or other number) of tokens $<BIN\_i>$ may be used, here i $\in [0,1000]$. The coordinates of each bounding box $(x_{min}, y_{min}, x_{max}, y_{max})$ are represented by coordinates normalized using the width and height of the image $(x_{min}, y_{min}, x_{max}, y_{max} \in [0,1])$, and then mapped to $[0,1000]$. Therefore, all three tasks may be modeled using an autoregressive prediction token sequence.

Regarding the visual encoder, an input image of the model is first scaled to 512*512 (pixels) and then input into the visual encoder to obtain image tokens. A variety of backbone networks of visual encoders currently known and/or to be developed in the future may be used. At this time, the output feature may be represented as 32*32*2048. According to an example implementation of the present disclosure, a linear projection layer may be used to process and generate 1024 image tokens. These image tokens may be directly connected with the text feature (e.g., embedding) together for autoregressive sequence modeling.

Regarding the autoregressive transformer, a variety of encoder-decoder backbone networks currently known and/or to be developed in the future may be used. For example, an encoder network may receive a connected sequence (including image tokens and text tokens) as input. The encoder network may output a joint embedding, which is then fused into a decoder network using cross-attention. The decoder network is responsible for auto-regressive generation of output. Specifically, the model used may include 24 encoding layers and 12 decoding layers.

Regarding the training loss, based on the multi-task unified formula, the training loss for the guesser and the questioner may be expressed using a simple cross-entropy loss of next word prediction:

$$L = -\frac{1}{N} \sum_N \log(\widehat{w}_l | \widehat{w}_{<l}; I_t, \widehat{H}_t)$$

Formula 1

In the above formula, $\widehat{w}$ represents a token from the target token sequence, and N represents the length of the target sequence. The guesser $\hat{o} = (w_1, w_2, w_3, w_4)$ includes 4 integer tokens, and each target sequence of the questioner $\hat{q}_t = (w_1, ..., w_N)$ is a tokenized identification of the target question. Similarly, for the oracle, the loss may be expressed as follows:

$$L = -\frac{1}{N} \sum_N \log(\widehat{w}_l | \widehat{w}_{<l}; I_t, \widehat{H}_t, \hat{o})$$

Formula 2

In the above formula, the question $q_t$ and the target object o are used as conditions. Note that all conditions will be tokenized and connected together as input to the encoder model. In the context of the present disclosure, the model may be directly used to generate labels for the next self-evolving iteration model training process. In order to initiate self-evolution, a large number of unlabeled images and an initial model trained using manually labeled data may be used to generate new conversation data.

For the data source, the conversation in the context of the present disclosure is generated based on a specific and meaningful region in the image. If there is no label for the position of the object, an object detector may be used to determine the position of the object. Alternatively and/or additionally, an object detection or segmentation data set currently known and/or to be developed in the future may be directly used. For the ease of description, a known image data set may be used.

For the conversation generation, the interaction between the questioner, the guesser, and the oracle in the last self-evolving iteration may be directly used. For each image, at the beginning of the conversation generation, an object (e.g., each fruit in the reference image 420) may be randomly selected as the target. The conversation may start with the oracle, and the oracle gives an initial description of the object. Then, a dialogue between the oracle and the guesser continues in the form of a turn-by-turn conversation. In each round, after the oracle gives an answer, the determiner may be called to determine whether to stop the conversation and start performing visual grounding. If the determination result is "Yes", the conversation is stopped, and the guesser may output the bounding box of the object to compare with the bounding box of the object selected at the beginning. If the Intersection over Union (IoU) satisfies a predetermined condition (e.g., greater than 0.5), the data will be saved.

Then, in order to enhance the interaction ability of the model, the language model may be used to process the conversation data. Compared with the manually-labeled training dataset, the conversation data generated based on the process described above is lack of variation in semantics. If the generated conversation data is directly used to perform subsequent iterative training, the language understanding and generation ability of the model may be reduced.

Specifically, the model from the last iteration may be first used to generate a detailed topic description for each image. For example, the prompt "what do you see?" may be directly used, and the topic description of the image may be generated using the model. The topic description may provide more detailed visual information to the language model, which in turn facilitates the generation of conversation content with richer semantics. Then, the language model may be prompted to perform the following process according to the topic description and the original conversation generated using the model: 1) list the main points of the conversation; 2) list several possible scenarios of the conversation; 3) modify the conversation by asking questions based on a randomly selected scenario, so as to better fit the scenario; and 4) simplify the conversation. The conversations from step 3 and step 4 have richer information and simplify the original conversation.

The training process may be performed using the training data obtained by using the process described above, thereby obtaining a robust, simple and flexible SInViG. For common sense understanding, SInViG may understand common sense during the interaction process. This indicates that the self-evolving iteration may extract knowledge from the language model. Further, SInViG may interact with human through multi-modal input, and understand instructions in the form of language and gestures. Further, the user may correct potential errors in the conversation in real time, thereby correcting the target of the expected query. By the example implementations of the present disclosure, the object in the image may be recognized in a more accurate and efficient way, thereby performing the object recognition related downstream tasks.

Example Process

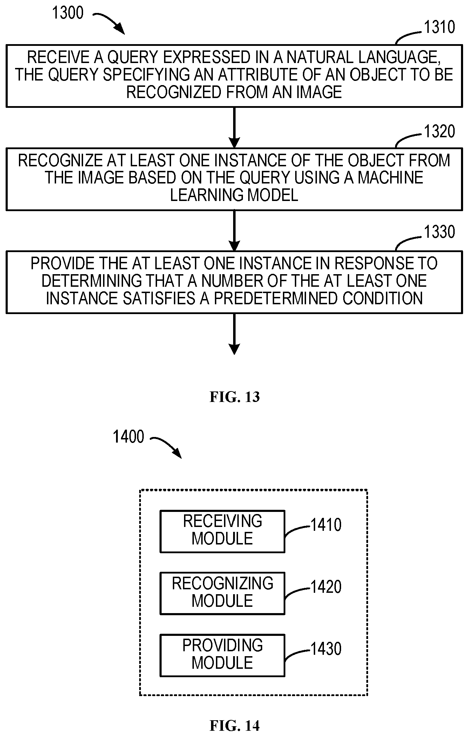

Fig. 13 illustrates a flowchart of a method 1300 for object recognition from an image in accordance with some implementations of the present disclosure. At block 1310, a query expressed in a natural language is received, the query specifying an attribute of an object to be recognized from the image. At block 1320, at least one instance of the object is recognized from the image based on the query using a machine learning model. At block 1330, the at least one instance is provided in response to determining that a number of the at least one instance satisfies a predetermined condition.

According to an example implementation of the present disclosure, the method further includes: in response to determining that the number of the at least one instance does not satisfy the predetermined condition, providing a first question for acquiring an attribute of the object; and recognizing a first group of instances of the object from the image using the machine learning model based on the query and a first answer to the first question, a first number of the first group of instances being no greater than the number of the at least one instance.

According to an example implementation of the present disclosure, the method further includes: in response to determining that the first number does not satisfy the predetermined condition, providing a second question for acquiring an attribute of the object; and recognizing a second group of instances of the object from the image using the machine learning model based on the query, the first answer, and a second answer to the second question, a second number of the second group of instances being no greater than the first number.

According to an example implementation of the present disclosure, the machine learning model is obtained based on: generating, using the machine learning model, a reference sample for training the machine learning model based on a reference image, the reference image including a reference instance of a reference object; generating, using a language model, a group of expanded reference samples for training the machine learning model based on the reference sample; and training the machine learning model using the group of expanded reference samples.

According to an example implementation of the present disclosure, the generating the reference sample includes: acquiring a reference query specifying an attribute of the reference object; generating a reference conversation based on the reference query, the reference conversation including at least one question for acquiring a reference attribute of the reference object and an answer to the at least one question; and generating the reference sample based on the reference image, the reference instance, the reference query, and the reference conversation.

According to an example implementation of the present disclosure, the generating the group of expanded reference samples includes: extracting key language information from the reference conversation; determining a group of candidate scenes associated with the reference image based on description information of the reference image and the key language information; generating, for a target candidate scene in the group of candidate scenes, an expanded reference conversation matching the target candidate scene; and generating a target expanded reference sample in the group of expanded reference samples based on the reference image, the reference instance, the reference query, and the expanded reference conversation.

According to an example implementation of the present disclosure, the method further includes: simplifying, using the language model, the expanded reference conversation, a number of question answering rounds in the simplified expanded reference conversation being smaller than a number of question answering rounds in the expanded reference conversation.

According to an example implementation of the present disclosure, the reference conversation is generated in at least one round, and the generating the reference conversation includes: asking, in a target round of the at least one round, a question for acquiring a reference attribute of the reference object; providing an answer to the question; and adding the question and the answer to the reference conversation.

According to an example implementation of the present disclosure, the method further includes: determining, by the machine learning model, a recognized position of the reference instance from the reference image; and in response to determining that a difference between the recognized position and a marked position of the reference instance in the reference image is greater than a predetermined threshold, discarding the question and the answer.

According to an example implementation of the present disclosure, the method further includes: in response to determining, by the machine learning model, that the answer is insufficient to determine the reference object, initiating a next round after the target round.

According to an example implementation of the present disclosure, the method further includes: providing a prompt to the machine learning model for setting a role of the machine learning model, the role including at least one of: a questioner, the questioner asks a question for acquiring a reference attribute of the reference object; an oracle, the oracle provides an answer to the question, the question being used to acquire the reference attribute of the reference object; a guesser, the guesser recognizes the reference instance from the reference image; a determiner, the determiner determines whether the answer is sufficient to determine the reference object; and a describer, the describer generally describes the reference image.

According to an example implementation of the present disclosure, the training the machine learning model includes: reducing a proportional relationship between an initial sample and a group of expanded reference samples, the machine learning model being pre-trained based on the initial sample; and training the machine learning model using the initial sample and the group of expanded reference samples based on the proportional relationship.

According to an example implementation of the present disclosure, the method further includes: determining, based on a position of the at least one instance in the image, a physical position of a physical object corresponding to the object in a physical space; and manipulating, using a robotic device in the physical space, the physical object at the physical position.

Example Apparatus and Device

Fig. 14 illustrates a block diagram of an apparatus 1400 for object recognition from an image in accordance with some implementations of the present disclosure. The apparatus 1400 includes: a receiving module 1410 configured to receive a query expressed in a natural language, the query specifying an attribute of an object to be recognized from the image; a recognizing module 1420 configured to recognize at least one instance of the object from the image based on the query using a machine learning model; and a providing module 1430 configured to provide the at least one instance in response to determining that a number of the at least one instance satisfies a predetermined condition.

According to an example implementation of the present disclosure, the apparatus further includes: a question module configured to provide a first question for acquiring an attribute of the object in response to determining that the number of the at least one instance does not satisfy the predetermined condition; and the recognizing module is further configured to recognize a first group of instances of the object from the image using the machine learning model based on the query and a first answer to the first question, a first number of the first group of instances being no greater than the number of the at least one instance.

According to an example implementation of the present disclosure, the question module is further configured to: provide a second question for acquiring an attribute of the object in response to determining that the first number does not satisfy the predetermined condition; and the recognizing module is further configured to recognize a second group of instances of the object from the image using the machine learning model based on the query, the first answer, and a second answer to the second question, a second number of the second group of instances being no greater than the first number.

According to an example implementation of the present disclosure, the machine learning model is obtained based on: a generating module configured to generate, using the machine learning model, a reference sample for training the machine learning model based on a reference image, the reference image including a reference instance of a reference object; an expanding module configured to generate, using a language model, a group of expanded reference samples for training the machine learning model based on the reference sample; and a training module configured to train the machine learning model using the group of expanded reference samples.

According to an example implementation of the present disclosure, the generating module includes: a query acquiring module configured to acquire a reference query specifying an attribute of the reference object; a conversation generating module configured to generate a reference conversation based on the reference query, the reference conversation including at least one question for acquiring a reference attribute of the reference object and an answer to the at least one question; and a sample generating module configured to generate the reference sample based on the reference image, the reference instance, the reference query, and the reference conversation.

According to an example implementation of the present disclosure, the sample generating module includes: an extracting module configured to extract the key language information from the reference conversation; a scene determining module configured to determine the group of candidate scenes associated with the reference image based on the description information of the reference image and the key language information; the conversation generating module is further configured to generate, for the target candidate scene in the group of candidate scenes, the expanded reference conversation matching the target candidate scene; and the sample generating module is further configured to generate the target expanded reference sample in the group of expanded reference samples based on the reference image, the reference instance, the reference query, and the expanded reference conversation.

According to an example implementation of the present disclosure, the apparatus further includes: a simplifying module configured to simplify the expanded reference conversation using the language model, a number of question answering rounds in the simplified expanded reference conversation being smaller than a number of question answering rounds in the expanded reference conversation.

According to an example implementation of the present disclosure, the reference conversation is generated in at least one round, and the conversation generating module is further configured to: ask, in a target round of the at least one round, a question for acquiring a reference attribute of the reference object; provide an answer to the question; and add the question and the answer to the reference conversation.

According to an example implementation of the present disclosure, the apparatus further includes: a position recognizing module configured to determine, by the machine learning model, a recognized position of the reference instance from the reference image; and a verifying module configured to discard the question and the answer in response to determining that a difference between the recognized position and a marked position of the reference instance in the reference image is greater than a predetermined threshold.

According to an example implementation of the present disclosure, the apparatus further includes: an initiating module configured to initiate a next round after the target round in response to determining, by the machine learning model, that the answer is insufficient to determine the reference object.

According to an example implementation of the present disclosure, the apparatus further includes: a role setting module configured to provide a prompt to the machine learning model for setting a role of the machine learning model, the role including at least one of: a questioner, the questioner asks a question for acquiring a reference attribute of the reference object; an oracle, the oracle provides an answer to the question, the question being used to acquire the reference attribute of the reference object; a guesser, the guesser recognizes the reference instance from the reference image; a determiner, the determiner determines whether the answer is sufficient to determine the reference object; and a describer, the describer generally describes the reference image.

According to an example implementation of the present disclosure, the training module includes: a reduction module configured to reduce a proportional relationship between an initial sample and the group of expanded reference samples, the machine learning model being pre-trained based on the initial sample; and a proportionality-based training module configured to train the machine learning model using the initial sample and the group of expanded reference samples based on the proportional relationship.

According to an example implementation of the present disclosure, the apparatus further includes: a physical position determining module configured to determine, based on a position of the at least one instance in the image, a physical position of a physical object corresponding to the object in the physical space; and a manipulating module configured to manipulate, using a robotic device in the physical space, the physical object at the physical position.

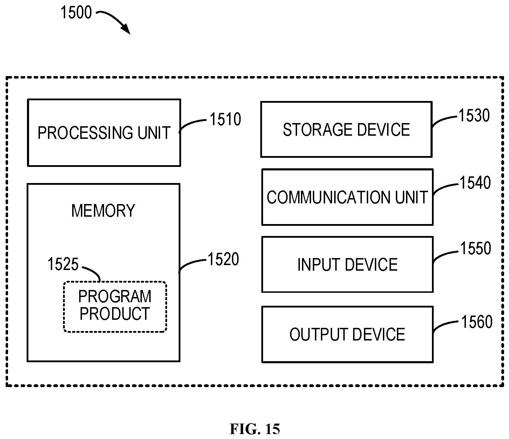

Fig. 15 illustrates a block diagram of a device 1500 capable of implementing multiple implementations of the present disclosure. It should be appreciated that the computing device 1500 shown in Fig. 15 is only for example, and should not constitute any limitation to the functions and scope of the implementations described herein. The computing device 1500 shown in Fig. 15 may be used to implement the method described above.

As shown in Fig. 15, the computing device 1500 is in the form of a general-purpose computing device. Components of the computing device 1500 may include, but are not limited to, one or more processors or processing units 1510, a memory 1520, a storage device 1530, one or more communication units 1540, one or more input devices 1550, and one or more output devices 1560. The processing unit 1510 may be a physical or virtual processor and may perform various processes according to a program stored in the memory 1520. In a multi-processor system, multiple processing units execute computer-executable instructions in parallel to improve parallel processing capability of the computing device 1500.

The computing device 1500 generally includes multiple computer storage media. Such media may be any available media accessible by the computing device 1500, including but not limited to volatile and non-volatile media, removable and non-removable media. The memory 1520 may be a volatile memory (e.g., a register, a cache, a Random Access Memory (RAM)), a non-volatile memory (e.g., a Read Only Memory (ROM), an Electrically Erasable Programmable Read-Only Memory (EEPROM), a flash), or any combination thereof. The storage device 1530 may be a removable or non-removable medium, and may include a machine-readable medium such as a flash drive, a disk, or any other medium that can be used to store information and/or data (e.g., training data for training) and can be accessed within the computing device 1500.

The computing device 1500 may further include additional removable/non-removable, volatile/non-volatile storage media. Although not shown in Fig. 15, a disk drive for reading from or writing to a removable, non-volatile disk (e.g., a "floppy disk") and an optical disk drive for reading from or writing to a removable, non-volatile optical disk may be provided. In these cases, each drive may be connected to a bus (not shown) by one or more data media interfaces. The memory 1520 may include a computer program product 1525 having one or more program modules configured to perform various methods or actions of various implementations of the present disclosure.

The communication unit 1540 implements communication with other computing devices through communication media. Additionally, the functions of the components of the computing device 1500 may be implemented by a single computing cluster or multiple computing machines that can communicate through communication connections. Therefore, the computing device 1500 may operate in a networked environment using logical connections with one or more other servers, network personal computers (PCs), or another network node.

The input device 1550 may be one or more input devices, such as a mouse, a keyboard, a trackball, etc. The output device 1560 may be one or more output devices, such as a display, a speaker, a printer, etc. The computing device 1500 may further communicate with one or more external devices (not shown) through the communication unit 1540 as required, the external devices such as a storage device, a display device, etc., communicate with one or more devices that enable the user to interact with the computing device 1500, or communicate with any device (e.g., a network card, a modem, etc.) that enables the computing device 1500 to communicate with one or more other computing devices. Such communication may be performed via an input/output (I/O) interface (not shown).

According to an example implementation of the present disclosure, a computer-readable storage medium is provided, on which computer-executable instructions are stored, the computer-executable instructions being executed by a processor to implement the method described above. According to an example implementation of the present disclosure, a computer program product is further provided, the computer program product being tangibly stored on a non-transitory computer-readable medium and including computer-executable instructions, the computer-executable instructions being executed by a processor to implement the method described above. According to an example implementation of the present disclosure, a computer program product is provided, on which a computer program is stored, the computer program implementing the method described above when executed by a processor.

Various aspects of the present disclosure are described herein with reference to the flowcharts and/or block diagrams of the method, apparatus, device, and computer program product implemented according to the present disclosure. It should be appreciated that each block of the flowcharts and/or block diagrams and combinations of blocks in the flowcharts and/or block diagrams may be implemented by computer-readable program instructions.

These computer-readable program instructions may be provided to a processing unit of a general-purpose computer, a special-purpose computer, or other programmable data processing apparatus to produce a machine, such that when the instructions are executed by the processing unit of the computer or other programmable data processing apparatus, the apparatus that implements the functions/actions specified in one or more blocks in the flowchart and/or block diagram is generated. These computer-readable program instructions may also be stored in a computer-readable storage medium, and these instructions enable the computer, programmable data processing apparatus and/or other devices to work in a specific way, so that the computer-readable medium storing the instructions includes an article of manufacture, which includes instructions for implementing various aspects of the functions/actions specified in one or more blocks in the flowchart and/or block diagram.

The computer-readable program instructions may be loaded onto a computer, other programmable data processing apparatus, or other device, such that a series of operational steps are performed on the computer, other programmable data processing apparatus, or other device to generate a computer-implemented process, thereby enabling the instructions executed on the computer, other programmable data processing apparatus, or other device to implement the functions/actions specified in one or more blocks in the flowchart and/or block diagram.

The flowcharts and block diagrams in the figures show possible architectures, functions, and operations of systems, methods, and computer program products according to multiple implementations of the present disclosure. In this regard, each block in the flowcharts or block diagrams may represent a module, a program segment, or a part of an instruction, and the module, the program segment, or the part of the instruction contains one or more executable instructions for implementing a specified logical function. In some alternative implementations, the functions marked in the blocks may also occur in a different order from the order marked in the figures. For example, two consecutive blocks may actually be executed substantially in parallel, or sometimes may be executed in a reverse order, depending on the functions involved. It should also be noted that each block in the block diagrams and/or flowcharts, and combinations of blocks in the block diagrams and/or flowcharts may be implemented by a dedicated hardware-based system that performs specified functions or actions, or may be implemented by a combination of dedicated hardware and computer instructions.

Various implementations of the present disclosure have been described above, and the above description is for example, not exhaustive, and not limited to the disclosed implementations. Many modifications and changes are obvious to ordinary technical personnel in the technical field without departing from the scope and spirit of the described implementations. The selection of terms used herein is intended to best explain the principles, practical applications, or improvements to the technology in the market of the implementations, or to enable other ordinary technical personnel in the technical field to understand the implementations disclosed herein.

**Claims**

1. A method (1300) for object recognition from an image, comprising:

   receiving (1310) a query expressed in a natural language, the query specifying an attribute of an object to be recognized from the image;
   recognizing (1320) at least one instance of the object from the image based on the query using a machine learning model; and
   in response to determining that a number of the at least one instance satisfies a predetermined condition, providing (1330) the at least one instance.

2. The method of claim 1, further comprising:

   in response to determining that the number of the at least one instance does not satisfy the predetermined condition, providing a first question for acquiring an attribute of the object; and
   recognizing a first group of instances of the object from the image using the machine learning model based on the query and a first answer to the first question, a first number of the first group of instances being no greater than the number of the at least one instance.

3. The method of claim 2, further comprising: in response to determining that the first number does not satisfy the predetermined condition, providing a second question for acquiring an attribute of the object; and
   recognizing a second group of instances of the object from the image using the machine learning model based on the query, the first answer, and a second answer to the second question, a second number of the second group of instances being no greater than the first number.

4. The method of any of claims 1 to 3, wherein the machine learning model is obtained based on:

   generating, using the machine learning model, a reference sample for training the machine learning model based on a reference image, the reference image comprising a reference instance of a reference object;
   generating, using a language model, a group of expanded reference samples for training the machine learning model based on the reference sample; and
   training the machine learning model using the group of expanded reference samples.

5. The method of claim 4, wherein generating the reference sample comprises:

   acquiring a reference query specifying an attribute of the reference object;
   generating a reference conversation based on the reference query, the reference conversation comprising at least one question for acquiring a reference attribute of the reference object and an answer to the at least one question; and
   generating the reference sample based on the reference image, the reference instance, the reference query, and the reference conversation.

6. The method of claim 5, wherein generating the group of expanded reference samples comprises:

   extracting key language information from the reference conversation;
   determining a group of candidate scenes associated with the reference image based on description information of the reference image and the key language information;
   generating, for a target candidate scene in the group of candidate scenes, an expanded reference conversation matching the target candidate scene; and
   generating a target expanded reference sample in the group of expanded reference samples based on the reference image, the reference instance, the reference query, and the expanded reference conversation.

7. The method of claim 6, further comprising:
   simplifying the expanded reference conversation using the language model, a number of question answering rounds in the simplified expanded reference conversation being smaller than a number of question answering rounds in the expanded reference conversation.

8. The method of claim 5, wherein the reference conversation is generated in at least one round, and generating the reference conversation comprises: in a target round of the at least one round,

   asking a question for acquiring a reference attribute of the reference object;
   providing an answer to the question; and
   adding the question and the answer to the reference conversation.

9. The method of claim 8, further comprising:

   determining, by the machine learning model, a recognized position of the reference instance from the reference image; and
   in response to determining that a difference between the recognized position and a marked position of the reference instance in the reference image is greater than a predetermined threshold, discarding the question and the answer.

10. The method of claim 5, further comprising: providing a prompt to the machine learning model for setting a role of the machine learning model, the role comprising at least one of:

    a questioner asking a question for acquiring a reference attribute of the reference object;
    an oracle providing an answer to a question for acquiring a reference attribute of the reference object;
    a guesser recognizing the reference instance from the reference image;
    a determiner determining whether the answer is sufficient to determine the reference object; and
    a describer generally describing the reference image.

11. The method of claim 4, wherein training the machine learning model comprises:

    reducing a proportional relationship between an initial sample and the group of expanded reference samples, the machine learning model being pre-trained based on the initial sample; and
    training the machine learning model using the initial sample and the group of expanded reference samples based on the proportional relationship.

12. The method of any of claims 1 to 11, further comprising:

    determining, based on a position of the at least one instance in the image, a physical position of a physical object in a physical space, wherein the physical object corresponds to the object; and
    manipulating, using a robotic device in the physical space, the physical object at the physical position.

13. An apparatus (1400) for object recognition from an image, comprising:

    a receiving module (1410) configured to receive a query expressed in a natural language, the query specifying an attribute of an object to be recognized from the image;
    a recognizing module (1420) configured to recognize at least one instance of the object from the image based on the query using a machine learning model; and
    a providing module (1430) configured to provide the at least one instance in response to determining that a number of the at least one instance satisfies a predetermined condition.

14. An electronic device (1500), comprising:

    at least one processing unit (1510); and
    at least one memory (1520) coupled to the at least one processing unit (1510) and storing instructions executable by the at least one processing unit (1510), the instructions, when executed by the at least one processing unit (1510), causing the electronic device to perform the method of any of claims 1 to 12.

15. A computer-readable storage medium having stored thereon a computer program that, when executed by a processor, causes the processor to implement the method of any of claims 1 to 12.

FIG. 1

FIG. 2

**FIG. 3**

**FIG. 4**

500

540
INITIAL SAMPLE

542 — REFERENCE IMAGE

544 — REFERENCE INSTANCE

546 — REFERENCE QUERY

548 — REFERENCE CONVERSATION

510 IMAGE

512 INSTANCE

520 QUERY

THE BALL

530 CONVERSATION

AGENT: WHICH BALL?
USER: THE BALL IN THE MIDDLE.
AGENT: THE WHITE BALL?
USER: YES.
AGENT: GOT IT.

**FIG. 5**

600

420 REFERENCE IMAGE

610 INSTANCE

210
MACHINE LEARNING MODE

QUESTIONER — 620

ORACLE — 622

GUESSER — 624

430
REFERENCE SAMPLE

REFERENCE IMAGE — 632

REFERENCE INSTANCE — 634

REFERENCE QUERY — 636

REFERENCE CONVERSATION — 638

**FIG. 6**

700

710 RECOGNIZED POSITION

720 MARKED POSITION

730 DIFFERENCE

$$IOU = \frac{box_{\text{RECOG-NIZED}} \cap box_{\text{MARKED}}}{box_{\text{RECOG-NIZED}} \cup box_{\text{MARKED}}}$$

**FIG. 7**

800

430 REFERENCE SAMPLE

812 DESCRIPTION INFORMATION

460 LANGUAGE MODEL

810 KEY LANGUAGE INFORMATION

820 SCENE

822 EXPANDED CONVERSATION

824 SIMPLIFIED CONVERSATION

830 SCENE

832 EXPANDED CONVERSATION

834 SIMPLIFIED CONVERSATION

...

840 EXPANDED REFERENCE SAMPLE

842 EXPANDED REFERENCE SAMPLE

...

844 EXPANDED REFERENCE SAMPLE

**FIG. 8**

900

910 IMAGE

912
RECOGNITION
RESULT

914
RECOGNITION
RESULT

920
INTERACTION
PROCES

USER: DO YOU SEE THAT PEPPER?
AGENT: WHICH ONE?
USER: THE ONE BETWEEN THE APPLE
AND THE PEAR.
AGENT: IS IT THE ORANGE PEPPER?
USER: NO.
AGENT: IS IT THE RED PEPPER?
USER: YES.
AGENT: I SEE IT.

**FIG. 9**

1000

1010 IMAGE

1012
RECOGNITION
RESULT

1020 INTERACTION
PROCESS

USER: MY HUSBAND IS COOKING.
AGENT: WHICH ONE IS HE?
USER: HE IS A MAN WITH WHITE SHIRT
AGENT: IS HE THE FIRST ONE FROM THE
RIGHT?
USER: YES.
AGENT: IS HE PREPARING A SANDWICH.
USER: YES.
AGENT: I SEE HIM.

1022 INTERACTION PROCES

USER: MY HUSBAND IS COOKING.
AGENT: IS HE THE FIRST ONE FROM THE
RIGHT?
USER: YES.
AGENT: IS HE PREPARING A SANDWICH.
USER: YES.
AGENT: I SEE HIM.

1024 INTERACTION PROCES

USER: MY HUSBAND IS COOKING.
AGENT: IS HE PREPARING A SANDWICH?
USER: YES.
AGENT: I SEE HIM.

**FIG. 10**

**FIG. 11**

**FIG. 12**

1300

1310

RECEIVE A QUERY EXPRESSED IN A NATURAL LANGUAGE, THE QUERY SPECIFYING AN ATTRIBUTE OF AN OBJECT TO BE RECOGNIZED FROM AN IMAGE

1320

RECOGNIZE AT LEAST ONE INSTANCE OF THE OBJECT FROM THE IMAGE BASED ON THE QUERY USING A MACHINE LEARNING MODEL

1330

PROVIDE THE AT LEAST ONE INSTANCE IN RESPONSE TO DETERMINING THAT A NUMBER OF THE AT LEAST ONE INSTANCE SATISFIES A PREDETERMINED CONDITION

**FIG. 13**

1400

RECEIVING MODULE — 1410

RECOGNIZING MODULE — 1420

PROVIDING MODULE — 1430

**FIG. 14**

1500

PROCESSING UNIT —1510

STORAGE DEVICE —1530

MEMORY

COMMUNICATION UNIT —1540

1525

—1520

INPUT DEVICE —1550

PROGRAM
PRODUCT

OUTPUT DEVICE —1560

**FIG. 15**

**EUROPEAN SEARCH REPORT**

Application Number

EP 25 15 4431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Levy Matan ET AL: "Chatting Makes Perfect: Chat-based Image Retrieval", , 14 December 2023 (2023-12-14), XP093285121, Retrieved from the Internet: URL:https://proceedings.neurips.cc/paper_files/paper/2023/file/c1b3d1e2cf53bb28cabd801bd58b3521-Paper-Conference.pdf [retrieved on 2025-06-06] * abstract; figure 1 * ----- | 1-15 | INV. G06F16/532 G06F16/583 |

TECHNICAL FIELDS SEARCHED (IPC)

G06F

The present search report has been drawn up for all claims

| Place of search | Date of completion of the search | Examiner |
|---|---|---|
| The Hague | 10 June 2025 | Correia Martins, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)